# FASCICULE DE BREVET EUROPEEN

(11) **EP 1 352 494 B1**
(45) Date de publication et mention de la délivrance du brevet: **19.10.2011**
(21) Numéro de dépôt: 02710985.9
(22) Date de dépôt: 11.01.2002
(51) Int. Cl.: H04L 9/30, G06F 7/72

(54) **DISPOSITIF ET PROCEDE D'EXECUTION D'UN ALGORITHME CRYPTOGRAPHIQUE**
VORRICHTUNG UND VERFAHREN ZUR AUSFÜHRUNG EINES KRYPTOGRAPHISCHEN ALGORITHMUS
DEVICE AND METHOD FOR EXECUTING A CRYPTOGRAPHIC ALGORITHM

(30) Priorité: 18.01.2001 FR 0100688
(43) Date de publication de la demande: 15.10.2003
(73) Titulaire: Gemalto SA, 92190 Meudon (FR)
(72) Inventeur: JOYE, Marc, F-83640 Saint Zacharie (FR); PAILLIER, Pascal, F-75020 Paris (FR); CORON, Jean-Sébastien, F-92600 Asnières sur Seine (FR)
(86) Numéro de dépôt international: PCT/FR2002/000113
(87) Numéro de publication internationale: WO 2002/058321

(56) Documents cités:
- WO-A-98/52319
- US-A- 6 144 740

## Description

L'invention concerne le domaine des algorithmes cryptographiques destinés notamment aux dispositifs électroniques communicants, dont un exemple non restrictif est une carte à puce.

Les algorithmes cryptographiques sont couramment exécutés dans de tels dispositifs pour assurer le chiffrement de données émises et/ou le déchiffrement de données reçues lorsque celles-ci doivent demeurer confidentielles. A cette fin, on prévoit un microprocesseur apte à exécuter l'algorithme cryptographique, associé à une mémoire figée (ROM) pour l'enregistrement du programme contenant l'algorithme et une mémoire re-inscriptibe (RAM) pour constituer des registres et contenir les données évolutives. Les informations codées du dispositif transitent entre le microprocesseur et une interface de communication, formant un port vers l'extérieur.

Il est possible pour des fraudeurs d'interférer avec l'algorithme cryptographique en agissant soit au niveau de l'interface de communication, soit au sein du microprocesseur et de ses mémoires, dans le but de casser le code afin de rendre intelligible les données codées ou de modifier ces données à leur avantage.

Pour minimiser ce genre de risque d'attaque, plusieurs stratégies de protection ont déjà été envisagées, tant au niveau de la réalisation matérielle des dispositifs qu'au niveau des processus de calcul.

Dans le domaine de la carte à puce, entre autres, il existe plusieurs attaques possibles, dont une dite "attaque par faute". Dans ce type d'attaque, l'attaquant induit une faute quelconque pendant le calcul d'un algorithme cryptographique, dans le but d'exploiter la présence de cette faute pour extraire une information secrète.

Ce type d'attaque est notamment envisageable avec l'algorithme RSA (Rivert, Shamir, Adleman), qui est celui le plus utilisé en cryptographie dans ce domaine d'application. La sécurité y est basée sur la factorisation. On établit un nombre N qui est le produit de deux grands nombres premiers p et q, soit N = p.q. Pour signer un nombre x qui exprime un message, on utilise une clé secrète d afin de calculer la valeur y = x^{d} modulo N. On rappelle de manière générale qu'une valeur v exprimée modulo N (abréviation "v mod N") est égale au reste inférieur à N à l'issue d'une soustraction d'un multiple entier de N; par exemple 11 modulo 3 = 2, soit le reste inférieur à 3 après la soustraction du multiple 3 fois 3.

Pour vérifier que la signature du code est correcte, on utilise une clé correspondante, dite clé publique, qui est un exposant e. On vérifie simplement que x = y^{e} mod N est égal à la valeur constitutive du message.

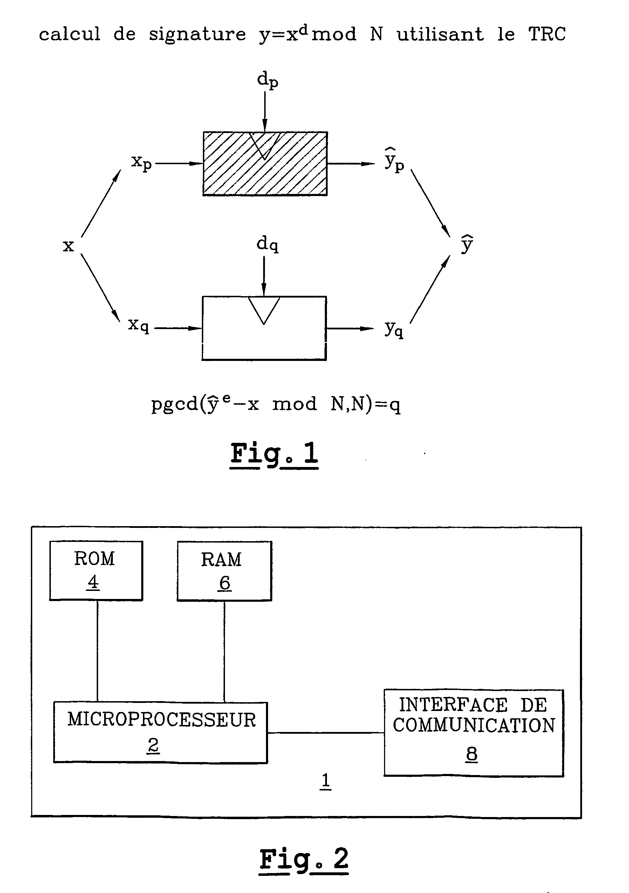

La figure 1 illustre le processus de calcul de la signature y = x^{d} modulo N en utilisant le théorème des restes chinois (TRC). Le théorème des restes chinois est également connu par sa dénomination anglo-saxonne "Chinese remainder theorem" (CRT).

Pour gagner du temps, exécution quatre fois plus rapide de l'algorithme, on n'effectue pas les calculs directement, modulo N, mais on effectue d'abord les calculs modulo p et modulo q.

On désigne les valeurs de x modulo p et x modulo q respectivement par xₚ et x_{q}. Par ailleurs, on désigne par dₚ la valeur d modulo (p-1), et par d_{g} la valeur d modulo (q-1).

On effectue le calcul modulo p par calcul de yₚ = xₚ exposant dp modulo p. De même, on calcule modulo q la valeur y_{q} = x_{q} exposant d_{q} modulo q.

Après avoir obtenu les valeurs yₚ et y_{q} respectivement modulo p et modulo q, on les recombine par le théorème des restes chinois pour obtenir la valeur y précitée.

Supposons maintenant qu'un attaquant, par une méthode quelconque, induit une erreur durant le calcul de yₚ, mais pas durant celui de y_{q}. Cela impliquerait que la valeur de yₚ sera incorrecte. Le fait qu'il s'agisse d'une valeur incorrecte est indiqué par un accent circonflexe au-dessus du "y" dans la figure 1. Par contre, la valeur de y_{q} sera correcte. De ce fait, lorsque l'on recombinera les valeurs ^yₚ et y_{q} par le TRC, la signature résultante sera incorrecte.

Si l'attaquant connaît la valeur de la clé publique de vérification e, il peut calculer la valeur ^y^{e} - x modulo N. On a par ailleurs la signature correcte. y, égale à x^{d} modulo N. A partir de la relation préétablie x = y^{e}, l'attaquant n'a seulement à calculer que ^y^{e} - x modulo N. Il extrait le plus grand commun diviseur (pgcd) avec N, soit : pgdc (^y^{e} - x mod N,N) = q. Il obtient alors le facteur secret q. De ce fait, le code RSA est effectivement cassé.

Autrement dit, si quelqu'un est capable d'induire une erreur quelconque durant un calcul modulo p alors que le calcul modulo q est correct, il peut casser complètement le code RSA.

Une première contremesure pour éviter ce genre de scénario consiste à recalculer l'ensemble de l'algorithme. On compare les valeurs obtenues à l'issue des calculs successifs. S'ils sont identiques, on suppose qu'il n'y a pas eu d'erreur induite. Un problème avec cette approche est qu'elle ne détecte pas une faute permanente. Par exemple, on ne pourra déceler une attaque dans laquelle l'erreur induite consiste à forcer systématiquement un bit à un état logique déterminé.

Une autre méthode visant à parer une telle attaque est basée sur une vérification. On obtient une signature qui est calculée par le TRC. Ensuite, on vérifie que la signature est correcte et que la clé publique e est bonne. Cette approche est très fiable, mais l'algorithme de signature ne connaît pas toujours la clé de vérification e, ce qui empêche de pouvoir la mettre en oeuvre dans certaines applications.

Un autre inconvénient de cette méthode est que si e est grand, cela implique deux exponentiations. La signature est alors deux fois plus lente.

Une troisième méthode décrite dans le document US-A-6 144 740, consiste à modifier la valeur x en la multipliant par un aléa et en s'assurant plus tard dans le calcul de x^d que la valeur est divisible par ledit aléa. Un inconvénient majeur de cette méthode est la nécessité de mettre en oeuvre des opérations d'inversion modulaire et/ou de division connues pour être coûteuses en temps d'exécution.

Selon une autre contremesure à l'attaque par faute décrite par Shamir dans le document brevet WO 98/52319 on procède par l'algorithme suivant :
1. Choisir un nombre aléatoire r de faible valeur,
2. Calculer :
   yᵣₚ = x^{d} mod rp, et
   y_{rq} = x^{d} mod rq ;
3. Si yᵣₚ ≠ y_{rq} (mod r), alors il y a erreur, (peut-être induite par une attaque, et donc interruption de l'algorithme, sinon ;
4. Emettre en sortie : y = TRC (yᵣₚ mod p, q_{rq} mod q) .

Ainsi, pour un nombre aléatoire r, au lieu de calculer modulo p, on calcule modulo r.p et modulo r.q. Ensuite, on vérifie que ces deux valeurs sont égales modulo r. Si ces deux valeurs sont différentes, il est certain qu'il y a eu une erreur. Par contre, si elles sont égales, on peut supposer qu'il n'y a pas eu d'erreur, avec une probabilité de 1/r de se tromper dans cette supposition.

Un inconvénient de cette méthode est que l'on calcule yᵣₚ = x^{d} mod rp, et non pas x^{dp} mod rp. Or, la valeur d a la taille du module, qui est généralement un nombre de 1024 bits, tandis que dp est un nombre de la taille de la moitié du module, soit 512 bits dans l'exemple.

Cela implique que dans le schéma normal, sans détection de faute, on effectue une première exponentiation avec un exposant et un module de 512 bits, et une seconde exponentiation avec un exposant et un module de 512 bits. En revanche, avec la méthode de contremesure selon le document brevet 5 633 929, on doit utiliser non pas dp, mais d. Cela implique que l'exposant aura une taille de 1024 bits de chaque côté. On perd donc en efficacité.

Un autre inconvénient de la méthode Shamir est qu'elle ne fonctionne que pour le mode de calcul basé sur le TRC. Or, il est également envisageable de calculer directement x^{d} modulo n, c'est-à-dire sans faire appel au théorème des restes chinois.

En effet, il existe deux façons de stocker la clé secrète. Soit on garde la valeur d, soit on garde les valeurs dₚ, d_{q}, p et q. Quand on calcule directement, on utilise le mode standard ; quand on calcule modulo p et modulo q, on utilise le mode TRC.

Au vu de ce qui précède, l'invention propose des contremesures, notamment aux attaques par défaut, qui autorisent des exponentiations avec un exposant de la taille du module et qui peuvent s'adapter au mode standard ou au mode TRC.

Plus particulièrement, l'invention concerne, selon un premier objet, un dispositif d'exécution d'un algorithme cryptographique, comprenant des moyens de calcul, des moyens de mémorisation de données et des moyens de communication de données. Selon l'invention, les moyens de mémorisation contiennent des valeurs déterminées r, p, q, dₚ et d_{q}, une fonction prédéterminée f(x) d'une valeur x où f (x) est égale à x^d, d étant une clé privée, ainsi qu'un algorithme du type à exécution en mode du théorème des restes chinois permettant aux moyens de calcul d'établir :
- une valeur zₚ égale à x^dₚ mod p*r et une valeur z_{q} égale à x^d_{q}, mod q*r ;
- une valeur bₚ=zₚ^d_{q} mod r et une valeur b_{q} égale à Z_{q}^dₚ mod r ;
- un constat d'une erreur dans le calcul si la valeur de bₚ mod r n'est pas égale à la valeur de b_{q} mod r ;
- une valeur y égale à TRC (zₚ mod p, z_{q}, mod q) s'il n'y a pas eu d'erreur constatée.

L'invention prévoit qu'un entier d'ₚ égal à dₚ+r1*(p-1) peut être utilisé à la place de l'entier dₚ, r1 étant un entier aléatoire.

En variante, un entier x+t*N peut être utilisé à la place de x, t étant un entier aléatoire et N étant égal à p*q.

Les contremesures conformes à l'invention permettent ainsi de protéger l'exécution de l'algorithme cryptographique contre les attaques par fautes sur les exponentiations.

Pour notamment protéger l'algorithme cryptographique contre une éventuelle attaque par faute sur l'étape du calcul de y par théorème du reste chinois l'invention prévoit en outre que :
- la valeur de y puisse être égale à TRC(zₚ mod p, z_{q} mod q) ;
- un constat d'une erreur de calcul puisse être établi si la valeur de (y-zₚ)*(y-z_{q}) est différente de 0 modulo N, étant égal à p*q ;
- la valeur y ne puisse être renvoyée que s'il n'y a pas eu d'erreur constatée.

Selon un mode de réalisation particulier les moyens de calcul peuvent établir :
- une valeur α=(y-zₚ) mod p*r et une valeur β=(y-zₚ) mod q*r ;
- une valeur τ qui est le double de la taille de l'entier r exprimée en nombre de bits ;
- une valeur t=α*β/N mod 2^τ ;
- un constat d'une erreur de calcul si α*β-t*N est différent de 0.

Selon ce mode de réalisation, il peut être prévu que la valeur y ne soit renvoyée que s'il n'y a pas eu d'erreur constatée.

Selon un mode de réalisation préféré, l'algorithme est du type RSA (Rivert, Shamir, Adleman). Cependant, d'autres types d'algorithmes peuvent être envisagés.

L'invention prévoit par ailleurs que le dispositif puisse avantageusement interrompre la communication de données en cas de constat d'erreur établi durant lesdits calculs.

Le dispositif en question peut être une carte à puce.

Selon un deuxième objet, l'invention concerne un procédé d'exécution d'un algorithme cryptographique comprenant, à partir de valeurs déterminées r, p, q, dₚ et d_{q}, d'une fonction prédéterminée f(x) d'une valeur x telle que f(x) est égale à x^d, d étant une clé privée, et d'un algorithme du type à exécution en mode du théorème des restes chinois (TRC), les étapes suivantes :
- calculer une valeur zₚ égale à x^dₚ mod p*r et une valeur de z_{q} égale à x^d_{q} mod q*r ;
- calculer une valeur bₚ égale à zₚ^d_{q} mod r et une valeur b_{q} égale à z_{q}^dₚ, mod r ;
- déterminer un constat d'une erreur dans le calcul si la valeur de bₚ mod r n'est pas égale à la valeur de b_{q} mod r ;
- calculer une valeur y égale à TRC (zₚ mod p, z_{q} mod q) s'il n'y a pas eu d'erreur constatée.

Les caractéristiques optionnelles présentées ci-dessus dans le cadre du dispositif s'appliquent mutatis mutandis à ce procédé.

L'invention et les avantages qui en découlent apparaîtront plus clairement à la lecture de la description qui suit des modes de réalisation préférés, donnés purement à titre d'exemples non-limitatifs, par référence aux dessins annexés dans lesquels :
- la figure 1, déjà analysée, est une représentation symbolique de la méthode de calcul cryptographique de la signature y = x^{d} mod N en utilisant le théorème des restes chinois (TRC) ;
- la figure 2 est un schéma bloc représentant de manière synoptique les éléments d'une carte à puce apte à mettre en oeuvre l'invention ; et
- la figure 3 est une représentation symbolique de l'approche générale à la détection d'erreur dans un algorithme cryptographique conforme à l'invention.

Les modes de réalisation sont décrits dans le cadre de cartes à puce, mais peuvent bien entendu s'appliquer à tous autres dispositifs dotés de moyens de calcul cryptographiques.

Ainsi que le montre la figure 1, la carte à puce 1 comprend un microprocesseur 2 couplé à une mémoire figée (ROM) 4 et à une mémoire vive (RAM) 6, le tout formant un ensemble permettant, entre autres, l'exécution d'algorithmes cryptographiques. Plus précisément, le microprocesseur 2 comporte les moyens de calcul arithmétiques nécessaires à l'algorithme, ainsi que des circuits de transfert de données avec les mémoires 4 et 6. La mémoire figée 4 contient le programme exécutoire de l'algorithme cryptographique sous forme de code source, alors que la mémoire vive 6 comporte des registres pouvant être mis à jour pour le stockage de résultats des calculs.

La carte à puce 1 comporte aussi une interface de communication 8 reliée au microprocesseur 2 pour permettre l'échange de données avec l'environnement extérieur. L'interface de communication 8 peut être du type "à contacts", étant dans ce cas formée d'un ensemble de plots de contacts destinés à se connecter à un contacteur d'un dispositif externe, tel qu'un lecteur de cartes, et/ou du type "sans contact". Dans ce dernier cas, l'interface de communication 8 comporte une antenne et des circuits de communication par voie hertzienne permettant un transfert de données par liaison sans fil. Cette liaison peut aussi permettre un transfert d'énergie d'alimentation des circuits de la carte 1.

L'ensemble des moyens matériels constitutifs de la carte sont connus et ne seront pas décrits de manière détaillée par souci de concision.

Dans l'exemple, l'algorithme cryptographique est du type RSA (de Rivert, Shamir, Adleman), dont les caractéristiques ont été décrites dans la partie introductive.

On s'intéressera dans ce qui suit plus particulièrement à la détection d'erreurs dans le calcul algorithmique et des contremesures conformes à la présente invention. L'erreur en question peut être provoquée délibérément par un attaquant qui vise à casser le code cryptographique utilisé par la carte à puce, comme expliqué dans la partie introductive. Ainsi, pour faire face à cette éventualité, les contremesures permettent de déceler de telles erreurs et de réagir en conséquence.

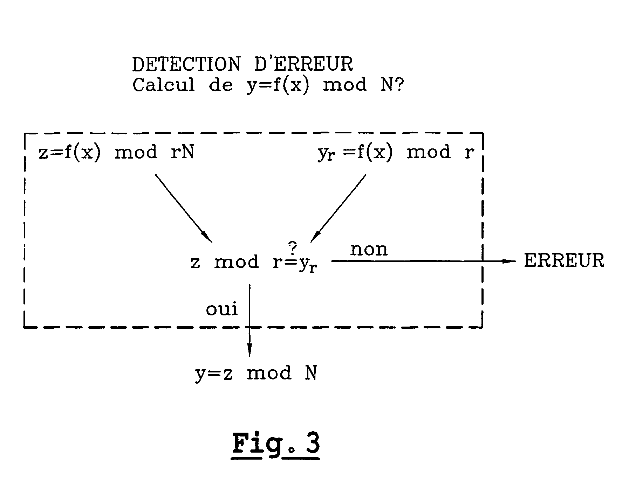

Le principe de détection d'erreur est représenté schématiquement à la figure 3. De façon générale, l'exécution de l'algorithme cryptographique implique un calcul d'une fonction f(x) modulo N, quelle que soit la fonction f(x). Ainsi, pour le cas d'un algorithme RSA, on prend une valeur de N qui est le produit de deux grands nombres premiers p et q.

Ainsi que le montre la figure 3, on prend un nombre aléatoire r, et on calcule d'une part z = f (x) modulo rN, et yᵣ = f (x) modulo r. Ensuite on vérifie que z mod r = yᵣ. Si cela n'est pas le cas, on est certain qu'il y a une erreur; sinon on suppose, avec une probabilité de se tromper de 1/r, qu'il n'y a pas d'erreur.

Ensuite, pour retrouver la valeur de y = f(x) modulo N, on calcule simplement y = z mod N.

Dans l'implémentation, r est un nombre de 32 bits.

Il sera maintenant décrit comment appliquer une contremesure conforme à l'invention lorsque l'algorithme est exécuté en mode standard. En mode standard, on calcule de façon "brutale" la valeur de x^{d} mod N, où d est un nombre qui constitue une clé secrète du code.

De manière générale, on procède comme suit. On calcule la valeur d'une part de f(x) modulo rN, et d'autre part de f(x) modulo r ; on vérifie que ces deux valeurs calculées sont égales. Si tel est le cas, on suppose qu'il n'y a pas d'erreur.

Lorsque l'on applique ceci à l'algorithme RSA, on procède comme suit. On ne prend plus un nombre aléatoire, mais un nombre déterminé, qui est ici le nombre 2¹⁶+1. Ce nombre a la propriété intéressante d'être un nombre premier. On calcule simplement la valeur z = x^{d} modulo (2¹⁶+1) .N. Ensuite, on calcule la valeur x^{d} mod (2¹⁶ + 1).

Dans le mode de réalisation, on ne calcule pas la valeur de x^{d}, mais on calcule plutôt la valeur de x^{d mod Φ} mod (2¹⁶ + 1), où Φ est la fonction indicatrice d'Euler du module. On peut ainsi réduire d modulo Φ (2¹⁶ + 1).

On note que quand un nombre prend comme valeur un nombre premier P, on a la condition: Φ(P) = P-1. Appliquée à l'exemple, cette condition donne : Φ(2¹⁶ + 1) = 2¹⁶.

De ce fait, on n'a pas à calculer x^{d} modulo (2¹⁶ + 1), mais plutôt x^{d mod 2^16} modulo (2¹⁶ + 1). Cette valeur est un nombre de 16 bits seulement. L'opération est donc très rapide.

Un autre avantage de cette façon de procéder est que d modulo 2¹⁶ est facile à calculer, s'agissant des 16 derniers bits de la clé secrète d.

Dans le mode standard, on ne va plus prendre un nombre aléatoire, mais un nombre premier, ou un nombre premier multiplié par un nombre aléatoire. La vérification va chaque fois se faire modulo le nombre premier que l'on a choisi. En procédant de cette manière, on peut réduire le temps de calcul. En effet, la fonction Φ indicatrice d'Euler ne peut être évaluée facilement que pour les nombres premiers.

Par contre - et c'est là où réside la force de l'algorithme RSA - pour casser le code RSA modulo N (= p.q), on doit calculer Φ(N). La valeur de cette fonction est égale à (p-1).(q-1). Si on ne connaît pas la factorisation de N, on ne peut pas calculer Φ(N).

Ainsi, la contremesure conforme à l'exemple pour le mode standard revient à effectuer l'algorithme suivant:
1. Calculer z = x^{d} mod (2¹⁶ + 1) N (pas de nombre aléatoire utilisé, mais une fonction Φ indicatrice d'Euler} ;
2. Si x^{d mod 2^16} ≠ z (mod (2¹⁶ + 1) {d mod 2¹⁶ correspond aux 16 bits de poids faible de d}, alors émettre en sortie ERREUR and cesser l'algorithme, sinon;
3. Emettre en sortie y = z mod N.

On comprend qu'il est ainsi possible de déceler une faute ayant pour origine possible une attaque, et donc de prendre des mesures préventives. Celles-ci consistent notamment à stopper le processus algorithmique et d'interrompre tout échange de données avec l'interface de communication 8.

Il sera maintenant décrit comment appliquer une contremesure conforme à l'invention lorsque l'algorithme est exécuté en mode de calcul basé sur le théorème des restes chinois (TRC), désigné ci-après mode TRC.

En mode TRC, on réalise simplement les calculs modulo p et modulo q.

On peut effectuer des calculs sur la base d'un modulo d'un nombre premier multiplié par le module (N), ou on peut prendre un nombre premier multiplié par un nombre aléatoire. On fera toujours la vérification sur la base d'un modulo d'un nombre premier. On produit ainsi un calcul avec un modulo d'un premier - 1.

A titre d'exemple, on considèrera, en mode TRC, le calcul modulo p. On choisit un nombre aléatoire k, par exemple de 16 bits. On va l'utiliser pour contrer d'autres attaques. On va aussi prendre kp, un nombre de 32 bits, pour éviter d'autres attaques, telles que des attaques en courant ou autres. On rappellera qu'une attaque en courant est basée sur l'analyse du courant consommé par le processeur à diverses étapes du calcul, visant à déterminer par exemple, les caractéristiques d'un calcul d'exponentiation en cours.

On établit la relation suivante : 2¹⁶+1 multiplié par une valeur rₚ, est égal à cette valeur rₚ que l'on concatène avec lui-même (ici, rₚ est une valeur de 16 bits). Cela vaut pour n'importe quel nombre premier. On calcule une valeur Kₚ (pour rendre l'exposant aléatoire).

On calcule la valeur zₚ = x^{Kp} modulo Rₚ.p.

Ensuite, on vérifie que les calculs modulo 2¹⁶+1 sont égaux. Si tel est le cas, on peut supposer, avec un risque de se tromper de ½¹⁶, que l'on n'aura pas d'erreur.

Ce qui précède reflète le principe général. Pour l'algorithme cryptographique RSA, on ne va pas prendre un nombre aléatoire, mais un nombre premier. De cette manière, on peut réduire l'exposant modulo un nombre premier - 1. On peut aussi prendre un nombre quelconque multiplié par un nombre premier.

En résumé, la contremesure conforme à l'exemple pour le mode TRC revient à effectuer l'algorithme suivant:
1. Choisir de manière aléatoire rₚ dans [0,2¹⁶) et kp ∈ [0,2³²) (pour parer contre les attaques en courant);
2. Soit Rp = (2¹⁶ + 1) rₚ = rₚ ∥rₚ et Kₚ = dp + kₚ (p - 1) ;
3. calculer zₚ = x^{Kp} mod Rₚp ;
4. Si x^{Kp mod 2 puissance 16} ≠ zₚ (mod (2¹⁶ + 1)) alors émettre en sortie ERREUR and cesser l'algorithme, sinon;
5. Répéter les opérations 1 à 4 modulo q ;
6. Emettre en sortie y = TRC (zₚ mod p, z_{q} mod q).

(Le symbole ∥ indique une concaténation; ainsi a∥b = la concaténation de a et de b. Par exemple, pour a = 1011 et b = 1101, alors a∥b = 10111101.)

On note de ce qui précède que l'on réalise ces opérations pour un R qui est soit un nombre premier, soit un nombre premier multiplié par un nombre quelconque. La vérification se fait toujours modulo ce nombre premier, de façon plus générale, une puissance première.

L'invention est valable non seulement pour les algorithmes cryptographiques RSA, présentés ici uniquement à titre d'illustration, mais pour tous les algorithmes cryptographiques où l'on travaille en arithmétique modulaire, puisque cette technique permet de vérifier que n'importe quelle fonction modulaire est correcte ou pas.

## Revendications

1. Dispositif (1) d'exécution d'un algorithme cryptographique, comprenant des moyens de calcul (2), des moyens de mémorisation de données (4, 6) et des moyens de communication de données (8), et une valeur déterminée r **caractérisé en ce** les moyens de mémorisation (4, 6) contiennent : des valeurs déterminées p, q, dₚ et d_{q}, une fonction prédéterminée f(x) d'une valeur x où f(x) est égale à x^d, d étant une clé privée, ainsi qu'un algorithme utilisant le théorème des restes chinois (TRC) permettant aux moyens de calcul (2) d'établir :
- une valeur zₚ égale à x^dₚ mod p*r et une valeur z_{q} égale à x^d_{q} mod q*r ;
- une valeur bₚ égale à zₚ^d_{q} mod r et une valeur b_{q} égale à z_{q}^dₚ mod r ;
- un constat d'une erreur dans le calcul si la valeur de bₚ mod r n'est pas égale à la valeur debq mod r ;
- une valeur y égale à TRC [Zₚ mod p, z_{q} mod q] s'il n'y a pas eu d'erreur constatée.

2. Dispositif d'exécution d'un algorithme cryptographique selon la revendication 1, **caractérisé en ce qu'**un entier d'ₚ égal à dₚ+r1*[p-1] est utilisé à la place de l'entier dₚ, r1 étant un entier aléatoire.

3. Dispositif d'exécution d'un algorithme cryptographique selon la revendication 1, **caractérisé en ce qu'**un entier x+t*N est utilisé à la place de x, t étant un entier aléatoire et N étant égal à p*q.

4. Dispositif d'exécution d'un algorithme cryptographique selon l'une quelconque des revendications 1 à 3, **caractérisé en ce que** :
- la valeur de y est égale à TRC [zₚ mod p, z_{q} mod q];
- un constat d'une erreur de calcul est établi si la valeur de [y-zₚ]*[y-z_{q}] est différente de 0 modulo N, étant égal a. p*q ;
- la valeur y est renvoyée s'il n'y a pas eu d'erreur constatée.

5. Dispositif d'exécution d'un algorithme cryptographique suivant la revendication 4, **caractérisé en ce que** les moyens de calcul établissent :
- une valeur α=[y-zₚ] mod p*r et une valeur β=[y-z_{q}] mod q*r ;
- une valeur τ qui est le double de la taille de l'entier r exprimée en nombre de bits ;
- une valeur t=α*β/N mod 2^τ ;
- un constat d'une erreur de calcul si α*β-t*N est différent de 0 ;
et **en ce que** la valeur y n'est renvoyée que s'il n'y a pas eu d'erreur constatée.

6. Dispositif selon l'une quelconque des revendications 1 à 5, **caractérisé en ce que** l'algorithme est du type RSA (Rivert, Shamir, Adleman).

7. Dispositif selon l'une quelconque des revendications 1 à 6, **caractérisé en ce qu'**il interrompt la communication de données en cas de constat d'erreur établi durant lesdits calculs.

8. Dispositif selon l'une quelconque des revendications 1 à. 7, **caractérisé en ce qu'**il s'agit d'une carte a. puce (1).

9. Procédé d'exécution d'un algorithme cryptographique **caractérisé en ce qu'**il comprend, à partir de valeurs déterminées r, p, q, dₚ et d_{q}, d'une fonction prédéterminée f(x) d'une valeur x telle que f(x) est égale à x^d, d étant une clé privée, et d'un algorithme utilisant le théorème des restes chinois (TRC), les étapes suivantes :
- calculer une valeur zₚ égale à x^dₚ mod p*r et une valeur de z_{q} égale à x^d_{q} mod q*r ;
- calculer une valeur bₚ égale à zₚ^d_{q} mod r et une valeur b_{q} égale à z_{q}^dₚ mod r ;
- déterminer un constat d'une erreur dans le calcul si la valeur de bₚ mod r n'est pas égale à la valeur de b_{q} mod r ;
- calculer une valeur y égale à TRC (zₚ mod p, z_{q} mod q) s'il n'y a pas eu d'erreur constatée.

10. Procédé d'exécution d'un algorithme cryptographique selon la revendication 9, **caractérisé en ce que** le calcul d'un entier d'ₚ égal à dₚ+r1*[p-1] est utilisé à la place de l'entier dₚ, r1 étant un entier aléatoire.

11. Procédé d'exécution d'un algorithme cryptographique selon la revendication 9, **caractérisé en ce que** le calcul d'un entier x+t*N est utilisé à la place de x, t étant un entier aléatoire et N étant égal à p*q.

12. Procédé d'exécution d'un algorithme cryptographique selon l'une quelconque des revendications 9 à 11, **caractérisé en ce qu'**il comporte en outre les étapes suivantes :
- calculer une valeur y égale à TRCF [zₚ mod p, z_{q} mod q] ;
- déterminer un constat d'une erreur de calcul si la valeur de [y-zₚ]*[y-z_{q}] est différente de 0 modulo N, N étant égal à p*q ;
- renvoyer la valeur y s'il n'y a pas eu d'erreur constatée.

13. Procédé d'exécution d'un algorithme cryptographique selon la revendication 9, **caractérisé en ce qu'**il comporte en outre les étapes suivantes :
- calculer une valeur α égale à [y-zₚ] mod p*r et une valeur β éqale à [y-z_{q}] mod q*r ;
- déterminer une valeur τ qui est le double de la taille de l'entier r exprimée en nombre de bits ;
- calculer une valeur t égale à α*β/N mod 2^τ, N étant égal à p*q ;
- déterminer un constat d'une erreur de calcul si α*β-t*N est différent de 0 ;
- renvoyer la valeur y s'il n'y a pas eu d'erreur constatée.

## Claims

1. A device (1) for executing an encryption algorithm, including calculation means (2), data storage means (4, 6) and data communication means (8) and a determined value r, **characterized in that** the storage means (4, 6) include: determined values p, q, dp and d_{q}, a predetermined function f (x) of a value x, where f(x) is equal to x^d, with d being a private key, as well as an algorithm using the Chinese remainder theorem (CRT) enabling the calculation means (2) to establish:
- a value zₚ equal to x^dₚ mod p*r and a value z_{q} equal to x^d_{q} mod q*r;
- a value bp equal to zₚ^d_{q} mod r and a value b_{q} equal to z_{q}^dₚ mod r;
- a miscalculation is established if the value of bp mod r is not equal to the value debq mod r;
- a value y equal to CRT [Zₚ mod p, z_{q} mod q], if no miscalculation has been established.

2. A device for executing an encryption algorithm according to claim 1, **characterized in that** an integer d'p equal to dₚ+r1*[p-1] is used instead of the integer dp, with r1 being a random integer.

3. A device for executing an encryption algorithm according to claim 1, **characterized in that** one integer x+t*N is used instead of x, with t being a random integer and N being equal to p*q.

4. A device for executing an encryption algorithm according to any one of claims 1 to 3, **characterized in that**:
- the value y is equal to CRT [zₚ mod p, z_{q} mod q] ;
- a miscalculation is established if the value of [y-zₚ]*[y-z_{q}] is different from 0 modulo N, being equal to p*q;
- the value y is returned if no miscalculation has been established.

5. A device for executing an encryption algorithm according to claim 4, **characterized in that** the calculation means establish:
- a value α=[y-zₚ] mod p*r and a value β=[y-z_{q}] mod q*r;
- a value τ which is the double of the size of the integer r expressed as a number of bits;
- a value t=α*β/N mod 2τ;
- a miscalculation is established if α*β-t*N is different from 0;
and **in that** the value y is returned only if no miscalculation has been established.

6. A device according to any one of claims 1 to 5, **characterized in that** the algorithm of the RSA (Rivert, Shamir, Adleman) type.

7. A device according to any one of claims 1 to 6, **characterized in that** it interrupts the communication of data in case an error is established during said calculations.

8. A device according to any one of claims 1 to 7, **characterized in that** the device is a chip card (1).

9. A method for executing an encryption algorithm, **characterized in that** it includes, from determined values r, p, q, dp and d_{q}, a predetermined function f(x) with a value x such that f(x) is equal to x^d, with d being a private key, and an algorithm using the Chinese remainder theorem (CRT), the following steps:
- calculating a value zₚ equal to x^dₚ mod p*r and a value of z_{q} equal to x^d_{q} mod q*r;
- calculating a value bp equal to zₚ^d_{q} mod r and a value b_{q} equal to z_{q}^dₚ mod r;
- establishing a miscalculation if the value of bp mod r is not equal to the value of b_{q} mod r;
- calculating a value y equal to CRT (zₚ mod p, z_{q} mod q) if no miscalculation has been established.

10. A method for executing an encryption algorithm according to claim 9, **characterized in that** the calculation of an integer d'p equal to dₚ+r1*[p-1] is used instead of the integer dp, with r1 being a random integer.

11. A method for executing an encryption algorithm according to claim 9, **characterized in that** the calculation of an integer x+t*N is used instead of x, with t being a random integer and N being equal to p*q.

12. A method for executing an encryption algorithm according to any one of claims 9 to 11, **characterized in that** it further includes the following steps:
- calculating a value y equal to CRT [zₚ mod p, z_{q} mod q)]
- establishing a miscalculation if the value of [y-zₚ] * [y-z_{q}] is different from 0 modulo N, with N being equal to p*q;
- returning the value y if no miscalculation has been established.

13. A method for executing an encryption algorithm according to claim 9, **characterized in that** it further includes the following steps:
- calculating a value α equal to [y-zₚ] mod p*r and a value β equal to [y-z_{q}] mod q*r;
- determining a value τ which is the double of the size of the integer r expressed as a number of bits;
- calculating a value t equal to α*β/N mod 2τ, with N being equal to p*q;
- establishing a miscalculation is if α*β-t*N is different from 0;
- returning the value y only if no miscalculation has been established.

## Patentansprüche

1. Ausführungsvorrichtung (1) eines kryptographischen Algorithmus, die Berechnungsmittel (2) der Datenspeichermittel (4, 6) und Datenkommunikationsmittel (8) und einen bestimmten Wert r umfasst, **dadurch gekennzeichnet, dass** die Speichermittel (4, 6) enthalten: bestimmte Werte p, q, dp und d_{q}, eine vorbestimmte Funktion f(x) eines Wertes x, bei dem f(x) gleich x^d ist, wobei d ein privater Schlüssel ist, sowie einen Algorithmus, der den Lehrsatz der chinesischen Reste (TRC) verwendet, der den Berechnungsmitteln (2) die Festlegung erlaubt:
- Einen Wert zₚ gleich x^dₚ mod p*r und einen Wert z_{q} gleich x^d_{q} mod q*r;
- Einen Wert bp gleich zₚ^d_{q} mod r und einen Wert bp gleich z_{q}^dₚ mod r;
- Eine Feststellung eines Fehlers bei der Berechnung, ob der Wert von bp mod r nicht gleich dem Wert debq mod r ist;
- Einen Wert y gleich TRC [zₚ mod p, z_{q} mod q] wenn kein Fehler festgestellt wurde.

2. Ausführungsvorrichtung eines kryptographischen Algorithmus gemäß Anspruch 1, **dadurch gekennzeichnet, dass** eine ganze Zahl d'p gleich dₚ+r1* [p-1] anstelle der ganzen Zahl dp verwendet wird, wobei r1 eine zufällige ganze Zahl ist.

3. Ausführungsvorrichtung eines kryptographischen Algorithmus gemäß Anspruch 1, **dadurch gekennzeichnet, dass** eine ganze Zahl x+t*N anstelle von x verwendet wird, wobei t eine zufällige ganze Zahl ist und N gleich p*q ist.

4. Ausführungsvorrichtung eines kryptographischen Algorithmus gemäß Anspruch 1 bis 3, **dadurch gekennzeichnet, dass**:
- Der Wert von y gleich TRC [zₚ mod p, z_{q} mod q] ist;
- Eine Feststellung eines Berechnungsfehlers ist nachgewiesen, wenn der Wert von [y-zₚ] * [y-z_{q}] unterschiedlich ist von 0 modulo N und dabei gleich a. p*q ist;
- Der Wert y wird zurückgesandt, wenn kein Fehler festgestellt wird.

5. Ausführungsvorrichtung eines kryptographischen Algorithmus gemäß Anspruch 4, **dadurch gekennzeichnet, dass** die Berechnungsmittel festlegen:
- Einen Wert α = [y-zₚ] mod p*r und einen Wert β [y-z_{q}]mod q*r;
- Einen Wert r, der das Doppelte der Größe der ganzen Zahl r ist, ausgedrückt in einer Anzahl von Bits;
- Einen Wert t = α*β/N mod 2^r;
- Eine Feststellung eines Berechnungsfehlers, wenn α*β-t*N unterschiedlich ist von 0;
Und dass der Wert y nur dann zurückgesandt wird, wenn kein Fehler festgestellt wurde.

6. Vorrichtung gemäß Anspruch 1 bis 5, **dadurch gekennzeichnet, dass** der Algorithmus vom Typ RSA (Rivert, Shamir, Adleman) ist.

7. Vorrichtung gemäß Anspruch 1 bis 6, **dadurch gekennzeichnet, dass** sie die Datenkommunikation bei einer Fehlerfeststellung unterbricht, die während der genannten Berechnungen nachgewiesen wird.

8. Vorrichtung gemäß Anspruch 1 bis 7, **dadurch gekennzeichnet, dass** es sich um eine Chipkarte a. (1) handelt.

9. Ausführungsverfahren eines kryptographischen Algorithmus, **dadurch gekennzeichnet, dass** es ausgehend von bestimmten Werten r, p, q, dp und d_{q} einer vorbestimmten Funktion f(x) eines Werts x die folgenden Stufen derart umfasst, dass f(x) gleich x^d ist, wobei d ein privater Schlüssel ist, und einen Algorithmus, der den Lehrsatz der chinesischen Reste (TRC) verwendet:
- Einen Wert zₚ gleich x^dₚ mod p*r und einen Wert von z_{q} gleich x^d_{q} mod q*r berechnen;
- Einen Wert bp gleich zₚ^d_{q} mod r und einen Wert b_{q} gleich z_{q}^dₚ mod r berechnen;
- Eine Feststellung eines Fehlers in der Berechnung bestimmen, wenn der Wert von bp mod r nicht gleich dem Wert von b_{q} mod r ist;
- Einen Wert y gleich TRC (zₚ mod p, z_{q} mod q) berechnen, wenn kein Fehler festgestellt wird.

10. Ausführungsverfahren eines kryptographischen Algorithmus gemäß Anspruch 9, **dadurch gekennzeichnet, dass** die Berechnung einer ganzen Zahl d'p gleich dₚ+r1* [p-1] anstelle der ganzen Zahl dp verwendet wird, wobei 1 eine zufällige ganze Zahl ist.

11. Ausführungsverfahren eines kryptographischen Algorithmus gemäß Anspruch 9, **dadurch gekennzeichnet, dass** die Berechnung einer ganzen Zahl x+t*N anstelle von x verwendet wird, wobei t eine zufällige ganze Zahl und N gleich p*q ist.

12. Ausführungsverfahren eines kryptographischen Algorithmus gemäß Anspruch 9 bis 11, **dadurch gekennzeichnet, dass** es darüber hinaus die folgenden Stufen umfasst:
- Berechnung eines Wertes y gleich TRC [zₚ mod p, z_{q} mod q];
- Bestimmung einer Feststellung eines Berechnungsfehlers, wenn der Wert von [y-zₚ] [y-z_{q}] unterschiedlich ist von 0 modulo N, wobei N gleich p*q ist;
- Rücksendung des Wertes y, wenn kein Fehler festgestellt wurde.

13. Ausführungsverfahren eines kryptographischen Algorithmus gemäß Anspruch 9, **dadurch gekennzeichnet, dass** es darüber hinaus die folgenden Stufen umfasst:
- Berechnung eines Wertes α gleich [y-zₚ] mod p*r und eines Wertes β gleich [y-z_{q}] mod q*r;
- Bestimmung eines Wertes r, der das Doppelte der Größe der ganzen Zahl r, ausgedrückt in einer Anzahl von Bits, ist;
- Berechnung eines Wertes t gleich α*β/N mod 2^r, wobei N gleich p*q ist;
- Bestimmung einer Feststellung eines Berechnungsfehlers, wenn α*β-t*N unterschiedlich ist von 0;
- Zurücksenden des Wertes y, wenn kein Fehler festgestellt wird.
